# EUROPÄISCHE PATENTSCHRIFT

(11) **EP 2 756 509 B1**
(45) Veröffentlichungstag und Bekanntmachung des Hinweises auf die Patenterteilung: **03.10.2018**
(21) Anmeldenummer: 12741349.0
(22) Anmeldetag: 01.08.2012
(51) Int. Cl.: H01G 4/012, H01G 4/30, H01C 7/18

(54) **VIELSCHICHTBAUELEMENT UND VERFAHREN ZU DESSEN HERSTELLUNG**
MULTI-LAYER COMPONENT AND METHOD FOR PRODUCING SAME
COMPOSANT MULTICOUCHE ET PROCÉDÉ DE FABRICATION DUDIT COMPOSANT MULTICOUCHE

(30) Priorität: 15.09.2011 DE 102011113496
(43) Veröffentlichungstag der Anmeldung: 23.07.2014
(73) Patentinhaber: Epcos AG, 81671 München (DE)
(72) Erfinder: RINNER, Franz, A-8530 Deutschlandsberg (AT)
(74) Vertreter: Epping - Hermann - Fischer
(86) Internationale Anmeldenummer: PCT/EP2012/065075
(87) Internationale Veröffentlichungsnummer: WO 2013/037559

(56) Entgegenhaltungen:
- EP-A1- 1 416 546
- JP-A- 2010 199 269
- KR-A-020100 074 789

## Beschreibung

Die Erfindung betrifft ein Vielschichtbauelement mit einer Schichtfolge aus Keramikschichten und Innenelektroden, sowie ein entsprechendes Verfahren zur Herstellung eines Vielschichtbauelements.

Vielschichtbauelemente, insbesondere Varistoren, besitzen einen Grundkörper, der aus Keramikschichten und flächigen Innenelektroden in alternierender Folge gestapelt und gesintert ist. Außenelektroden befinden sich üblicherweise auf zwei einander gegenüberliegenden Außenflächen des Grundkörpers senkrecht zu den Schichtebenen der Innenelektroden. Die Innenelektroden sind aufeinander folgend abwechselnd mit je einer der Außenelektroden elektrisch leitend verbunden. Die Innenelektroden reichen zu diesem Zweck jeweils bis zu der betreffenden Außenfläche des Grundkörpers und sind von der gegenüberliegenden Außenfläche und gegebenenfalls auch von den seitlich dazu vorhandenen Außenflächen des Grundkörpers beabstandet. Die Innenelektroden sind zur Bildung von Kapazitäten einander überlappend angeordnet und vor allem außerhalb des Bereichs ihrer Überlappung hohen Strombelastungen ausgesetzt. Das für die Innenelektroden verwendete Metall macht einen wesentlichen Anteil der Herstellungskosten aus.

In DE 196 22 690 A1 ist ein monolithischer Keramikkondensator in Form eines Vielschichtbauelementes beschrieben. Platin, Gold, Palladium, Legierungen dieser Metalle, insbesondere Silber-Palladium-Legierung, Kupfer, Eisen, Kobalt, Wolfram, Molybdän, Nickel und Nickellegierungen sind als Materialien für Innenelektroden angegeben.

In KR 10201 0007 4789 A ist ein Vielschichtkondensator beschrieben, dessen Elektrodenschichten streifenförmig strukturiert sind. Der mit einer Außenelektrode zu verbindende Rand der Elektrodenschicht ist mindestens so lang wie die entsprechende Abmessung der Elektrodenschicht im Bereich der Überlappung der Innenelektroden, und der Überlappungsbereich ist längs parallel zu dem Rand verlaufender Geraden mehrfach unterbrochen.

In DE 197 19 174 A1 ist ein Vielschichtbauelement beschrieben, bei dem keine Edelmetalle für die Innenelektroden verwendet werden und das die Herstellung von Kaltleitern in Vielschichttechnologie ermöglicht. Die Innenelektroden, die in dieser Schrift als Kontaktschichten bezeichnet werden, sind aus Aluminiumpaste oder einer aluminiumhaltigen Paste hergestellt.

In EP 1 416 546 A1 ist ein Verfahren zur Herstellung eines keramischen Vielschichtbauelementes angegeben, bei dem Grünfolien, die ein keramisches Pulver enthalten, mittels eines Siebdruckverfahrens mit strukturierten metallischen Schichten versehen werden, die als Innenelektroden des fertigen Bauelementes vorgesehen sind. Als Beispiele sind gezackte Strukturen der Metallschichten dargestellt. Die Zacken der Metallschichten enden in einem Abstand von einem Rand der Grünfolie. An dem gegenüberliegenden Rand der Grünfolie sind von den Metallschichten nur schmale Anschlussstreifen vorhanden.

Aufgabe der vorliegenden Erfindung ist es, ein kostengünstig herstellbares Vielschichtbauelement anzugeben. Außerdem soll ein zugehöriges Herstellungsverfahren angegeben werden.

Diese Aufgabe wird mit dem Vielschichtbauelement mit den Merkmalen des Anspruches 1 beziehungsweise mit dem Verfahren zur Herstellung eines Vielschichtbauelementes mit den Merkmalen des Anspruches 11 gelöst. Ausgestaltungen ergeben sich aus den abhängigen Ansprüchen.

Das Vielschichtbauelement hat einen Grundkörper aus keramischen Schichten und flächigen Innenelektroden in alternierender Folge. Auf den Außenflächen des Grundkörpers befinden sich voneinander getrennte Außenelektroden. Die Innenelektroden weisen jeweils einen Anschlussbereich und einen daran angrenzenden Überlappungsbereich auf. Ein geradliniger Rand des Anschlussbereiches ist mit einer der Außenelektroden elektrisch leitend verbunden. Der Überlappungsbereich ist in Abständen zu den Außenelektroden angeordnet. Der mit der Außenelektrode verbundene Rand des Anschlussbereiches ist mindestens so lang wie die Erstreckung des Überlappungsbereiches längs parallel zu diesem Rand verlaufender Geraden, und der Überlappungsbereich ist zumindest längs einiger dieser Geraden mehrfach unterbrochen.

Die Unterbrechungen der Innenelektroden in dem Überlappungsbereich bieten die Möglichkeit, Elektrodenmaterial einzusparen. Die Unterbrechungen werden vorzugsweise nur so groß ausgebildet, dass die maximale Stromtragfähigkeit des Bauelementes nicht oder zumindest nicht zu stark im Vergleich zu herkömmlichen Vielschichtbauelementen verringert wird.

Die Strombelastung der Innenelektroden ist jeweils in dem Anschlussbereich am höchsten und nimmt in dem Überlappungsbereich mit zunehmendem Abstand von der zugehörigen Außenelektrode ab. Das liegt daran, dass der im Betrieb des Bauelementes durch die Innenelektroden fließende Strom teilweise in die keramischen Schichten abfließt. Wenn die Innenelektroden in dem Überlappungsbereich nicht in der ganzen Fläche vorhanden, sondern quer zu dem Stromfluss unterbrochen sind, ist die Strombelastung der Innenelektroden zumindest in einem Abschnitt des Überlappungsbereiches größer als bei Bauelementen, die ganzflächige Innenelektroden besitzen.

Die Strombelastung der Innenelektroden in dem Überlappungsbereich kann auf die Strombelastung in dem Anschlussbereich begrenzt werden, indem die bezüglich der Stromrichtung seitlichen Abmessungen der Unterbrechungen der Innenelektroden in dem Überlappungsbereich dementsprechend geeignet begrenzt werden. Auf diese Weise kann möglichst viel Elektrodenmaterial eingespart werden, ohne die maximale Stromtragfähigkeit des Bauelementes im Vergleich zu herkömmlichen Vielschichtbauelementen zu verringern.

Erfindungsgemäß nehmen die Unterbrechungen des Überlappungsbereiches mit zunehmendem Abstand von dem Anschlussbereich in ihrer Anzahl, in ihrer Größe oder in ihrer Anzahl und Größe zu.

Bei weiteren Ausführungsbeispielen des Bauelementes ist der Überlappungsbereich in Zacken strukturiert, die zumindest abschnittsweise mit zunehmendem Abstand von dem Anschlussbereich schmaler werden.

Bei weiteren Ausführungsbeispielen ist der Überlappungsbereich in Streifen strukturiert.

Bei weiteren Ausführungsbeispielen sind die Streifen senkrecht zu dem mit der Außenelektrode verbundenen Rand des Anschlussbereiches und parallel zueinander angeordnet.

Bei weiteren Ausführungsbeispielen ist der Überlappungsbereich in gezackte Streifen strukturiert, die zumindest abschnittsweise mit zunehmendem Abstand von dem Anschlussbereich schmaler werden.

Bei weiteren Ausführungsbeispielen des Bauelementes sind Abmessungen der Unterbrechungen des Überlappungsbereiches höchstens halb so groß wie die Abstände zueinander benachbarter Innenelektroden.

Bei weiteren Ausführungsbeispielen weist der Überlappungsbereich eine Mehrzahl von Löchern auf.

Bei weiteren Ausführungsbeispielen weisen die Löcher eine Verteilung auf, deren Dichte mit zunehmendem Abstand von dem Anschlussbereich zunimmt.

Bei weiteren Ausführungsbeispielen sind die maximalen Abmessungen, insbesondere die Durchmesser der Löcher höchstens halb so groß wie die Abstände zueinander benachbarter Innenelektroden.

Bei weiteren Ausführungsbeispielen sind die Innenelektroden so angeordnet, dass die Überlappungsbereiche in einer Blickrichtung senkrecht zu den Schichten einander überlappen.

Bei dem Verfahren zur Herstellung eines Vielschichtbauelementes wird ein Grundkörper aus keramischen Schichten und darauf aufgebrachten flächigen Innenelektroden in alternierender Folge gebildet, wobei die Innenelektroden durch ein Bedrucken einer keramischen Grünfolie jeweils mit einem Anschlussbereich und einem daran angrenzenden Überlappungsbereich gebildet werden und ein Rand des Anschlussbereiches mit einer an dem Grundkörper angeordneten Außenelektrode elektrisch leitend verbunden wird. Die Innenelektroden werden beim Bedrucken der Grünfolie so strukturiert, dass der mit der Außenelektrode zu verbindende Rand des Anschlussbereiches mindestens so lang ist wie die Erstreckung des Überlappungsbereiches längs parallel zu diesem Rand verlaufender Geraden und dass der Überlappungsbereich zumindest längs einiger dieser Geraden mehrfach unterbrochen ist.

In einer Ausgestaltung des Verfahrens werden die Innenelektroden beim Bedrucken der Grünfolie so strukturiert, dass Abmessungen der Unterbrechungen des Überlappungsbereiches höchstens die halbe Dicke der Grünfolie betragen.

In einer weiteren Ausgestaltung des Verfahrens erfolgt das Bedrucken der keramischen Grünfolie unter Verwendung eines Bedruckungssiebs, und Löcher in dem Überlappungsbereich werden dadurch gebildet, dass einzelne Öffnungen des Bedruckungssiebs vor dem Bedrucken verschlossen werden.

Es folgt eine genauere Beschreibung von Beispielen des Vielschichtbauelementes und des Herstellungsverfahrens anhand der beigefügten Figuren.
Die Figur 1 zeigt eine perspektivische Ansicht eines Ausführungsbeispiels des Vielschichtbauelementes.
Die Figur 2 zeigt eine Schicht mit einem Ausführungsbeispiel einer Innenelektrode in Draufsicht.
Die Figur 3 zeigt eine Schicht mit einem weiteren Ausführungsbeispiel einer Innenelektrode in Draufsicht.
Die Figur 4 zeigt eine Schicht mit einem weiteren Ausführungsbeispiel einer Innenelektrode in Draufsicht.
Die Figur 5 zeigt eine Schicht mit einem weiteren Ausführungsbeispiel einer Innenelektrode in Draufsicht.
Die Figur 6 zeigt eine Schicht mit einem weiteren Ausführungsbeispiel einer Innenelektrode in Draufsicht.

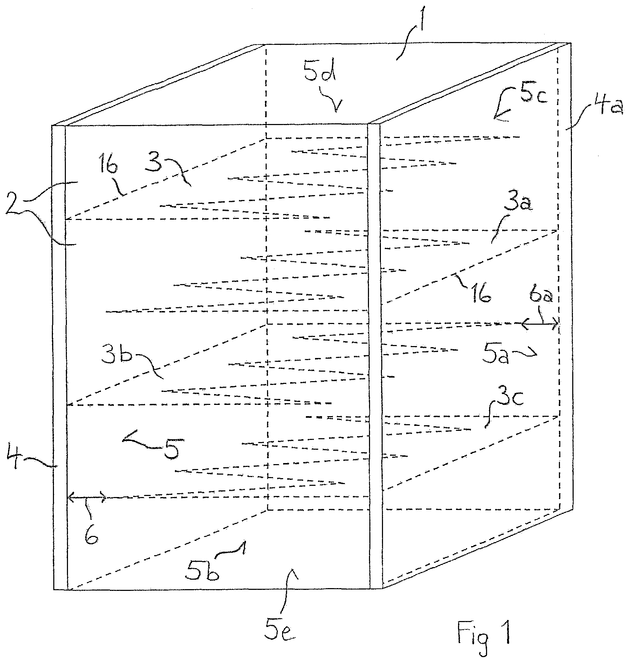

Die Figur 1 zeigt eine perspektivische Ansicht eines Ausführungsbeispiels des Vielschichtbauelementes mit einem Grundkörper 1, der aus keramischen Schichten 2 und dazwischen angeordneten Innenelektroden 3, 3a, 3b, 3c aufgebaut ist. Außenelektroden 4, 4a befinden sich auf zwei einander gegenüberliegenden Außenflächen 5, 5a des Grundkörpers 1. Die Außenelektroden 4, 4a sind in der Figur 1 als Beispiel in der Form ebener Schichten wiedergegeben, können aber auch die Kanten der Außenflächen 5, 5a umschließen und ein Stück weit auf die angrenzenden Außenflächen 5b, 5c, 5d, 5e reichen. Die Außenelektroden 4, 4a sind jedenfalls voneinander getrennt im Abstand zueinander angeordnet und erlauben somit einen getrennten elektrischen Anschluss. Die Innenelektroden 3, 3a, 3b, 3c sind mit einem geradlinigen Rand 16 jeweils mit einer der Außenelektroden 4, 4a elektrisch leitend verbunden. Die Verbindung zwischen den Innenelektroden 3, 3a, 3b, 3c und den Außenelektroden 4, 4a kann außer dem geradlinigen Rand 16 weitere Anteile des Randes der Innenelektroden 3, 3a, 3b, 3c umfassen, insbesondere, wenn die Außenelektroden 4, 4a Kanten des Grundkörpers 1 umschließen und die Innenelektroden 3, 3a, 3b, 3c an die seitlichen Außenflächen 5b, 5c angrenzen.

Die Innenelektroden 3, 3a, 3b, 3c können insbesondere gemäß dem in der Figur 1 gezeigten Beispiel aufeinander folgend abwechselnd mit den Außenelektroden 4, 4a verbunden sein, so dass zum Beispiel die Innenelektroden 3 und 3b mit der Außenelektrode 4 verbunden sind und die Innenelektroden 3a und 3c mit der Außenelektrode 4a verbunden sind. Auf diese Weise sind Gruppen elektrisch miteinander verbundener Innenelektroden 3 und 3b beziehungsweise 3a und 3c gebildet, die in der senkrechten Draufsicht auf die Schichten 2 zueinander gespiegelt erscheinen und einander teilweise überlappen.

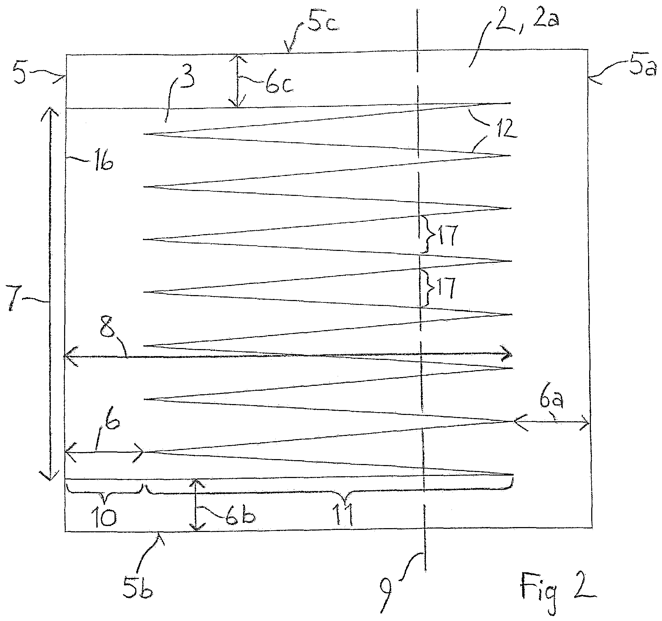

Die Innenelektroden 3, 3a, 3b, 3c besitzen auf der dem elektrisch angeschlossenen Rand 16 gegenüberliegenden Seite einen Abstand 6, 6a von der dort vorhandenen Außenelektrode 4, 4a und sind folglich nur mit einer der Außenelektroden 4, 4a elektrisch leitend verbunden. In der Figur 1 ist erkennbar, dass die Innenelektroden 3, 3a, 3b, 3c in besonderer Weise strukturiert sind, was im Folgenden anhand der Figuren 2 bis 6 näher erläutert wird.

Die Figur 2 zeigt eine keramische Schicht 2 beziehungsweise eine Grünfolie 2a, die zur Herstellung einer keramischen Schicht verwendet wird, mit einem Ausführungsbeispiel einer Innenelektrode 3 in Draufsicht. Die Innenelektrode 3 weist einen Anschlussbereich 10 und einen Überlappungsbereich 11 auf. Ein Rand 16 des Anschlussbereiches 10, der bis zu einer Außenfläche 5 des Grundkörpers reicht, ist dafür vorgesehen, mit einer an der betreffenden Außenfläche 5 vorgesehenen Außenelektrode elektrisch leitend verbunden zu werden. Auf der gegenüberliegenden Seite ist die Innenelektrode 3 in einem Abstand 6a von der Außenfläche 5a angeordnet. Der Überlappungsbereich 11 bleibt daher von beiden Außenflächen 5, 5a beabstandet. Der Abstand 6 des Überlappungsbereiches 11 von dem Rand 16 des Anschlussbereiches 10 entspricht einer Abmessung des Anschlussbereiches 10 und ist in dem Beispiel der Figur 2 gleich dem Abstand 6a der Innenelektrode 3 von der gegenüberliegenden Außenfläche 5a. Die Innenelektroden 3, 3a, 3b, 3c des Schichtstapels überlappen in der senkrechten Draufsicht auf die Schichten 2 in dem Überlappungsbereich 11. Die Innenelektrode 3 kann auch zu den seitlichen Außenflächen 5b, 5c Abstände 6b, 6c aufweisen oder statt dessen bis zu diesen Außenflächen 5b, 5c reichen.

In der Figur 2 sind Abmessungen 7, 8 der Innenelektrode 3 eingezeichnet, und zwar eine erste Abmessung 7, die parallel zu dem Rand 16 gemessen wird, und eine zweite Abmessung 8, die senkrecht zu dem Rand 16 in der Fläche der Innenelektrode 3 gemessen wird. Der Rand 16 besitzt die Länge der ersten Abmessung 7. Die Innenelektrode 3 kann auch im Überlappungsbereich 11 die erste Abmessung 7 besitzen, wie in dem Ausführungsbeispiel gemäß der Figur 2. Statt dessen kann der Überlappungsbereich 11 schmaler sein als die erste Abmessung 7. Der Rand 16 des Anschlussbereiches 10 ist daher mindestens so lang wie die Erstreckung des Überlappungsbereiches 11 längs parallel zu diesem Rand 16 verlaufender Geraden 9.

In dem Ausführungsbeispiel gemäß der Figur 2 ist der Überlappungsbereich 11 in Zacken 12 strukturiert, so dass die zweite Abmessung 8 nur durch die Spitzen der Zacken 12 erreicht wird. Die Zacken 12 bewirken, dass der Überlappungsbereich 11 längs einer parallel zu dem Rand 16 verlaufenden Geraden 9 mehrfach unterbrochen ist. Die Unterbrechungen 17 können bis zu dem Anschlussbereich 10 reichen, wie das in der Figur 2 gezeigt ist. Bei anderen Ausführungsbeispielen ist der Überlappungsbereich 11 nur längs einer parallel zu dem Rand 16 in einem Abstand zu dem Anschlussbereich 10 verlaufenden Geraden 9 mehrfach unterbrochen. Die Zacken 12 und die entsprechenden Zwischenräume zwischen den Zacken 12 beginnen bei diesen Ausführungsbeispielen in einem Abstand zu dem Anschlussbereich 10.

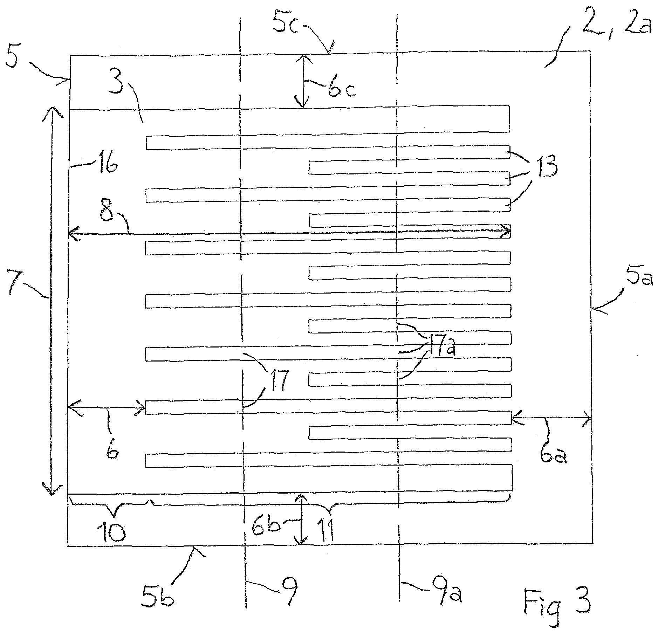

Die Figur 3 zeigt eine keramische Schicht 2 beziehungsweise eine Grünfolie 2a, die zur Herstellung einer keramischen Schicht verwendet wird, mit einem weiteren Ausführungsbeispiel einer Innenelektrode 3 in Draufsicht. Diejenigen Elemente der Figur 3, die Elementen der Figur 2 entsprechen, sind mit denselben Bezugszeichen versehen und werden nicht nochmals beschrieben.

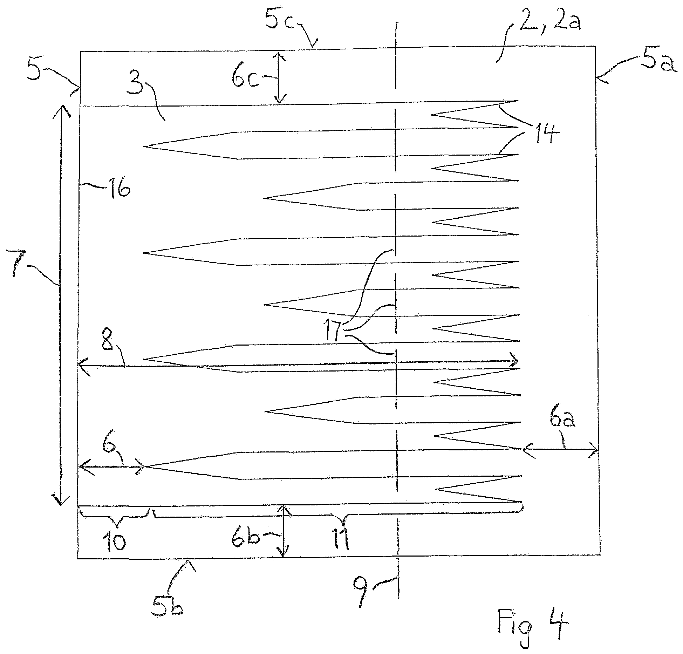

Bei dem Ausführungsbeispiel gemäß der Figur 3 sind Streifen 13 anstelle der Zacken 12 in dem Überlappungsbereich 11 vorhanden. Die Streifen 13 enden vorzugsweise jeweils in dem Abstand 6a vor der dem Rand 16 gegenüberliegenden Außenfläche 5a, so dass die Innenelektrode 3 im Bereich der Streifen 13 ihre zweite Abmessung 8 aufweist. Einige der Streifen 13 können statt dessen in einem größeren Abstand vor der Außenfläche 5a enden. Die Streifen 13 sind senkrecht zu dem Rand 16 des Anschlussbereiches 10 und parallel zueinander angeordnet und durch Zwischenräume unterschiedlicher Längen voneinander getrennt. Die Streifen 13 können statt dessen anders angeordnet sein, insbesondere zum Beispiel parallel zueinander und nicht senkrecht zu dem Rand 16 des Anschlussbereiches 10. Längs einer zu dem Rand 16 parallelen Geraden 9 sind die Unterbrechungen 17 in geringerer Anzahl vorhanden als die Unterbrechungen 17a längs einer in größerem Abstand zu dem Anschlussbereich 10 verlaufenden, zu dem Rand 16 parallelen Geraden 9a. Bei bevorzugten Ausführungsbeispielen nehmen die Unterbrechungen 17 des Überlappungsbereiches 11 mit zunehmendem Abstand von dem Anschlussbereich 10 in ihrer Anzahl, in ihrer Größe oder in ihrer Anzahl und Größe zu. Das ist auch bei dem Ausführungsbeispiel der Figur 4 der Fall. Bei weiteren Ausführungsbeispielen ist der Überlappungsbereich 11 nur längs einer parallel zu dem Rand 16 in einem Abstand zu dem Anschlussbereich 10 verlaufenden Geraden 9 mehrfach unterbrochen. Die Streifen 13 und die entsprechenden Zwischenräume zwischen den Streifen 13 beginnen in diesem Fall erst in einem Abstand zu dem Anschlussbereich 10.

Die Figur 4 zeigt eine keramische Schicht 2 beziehungsweise eine Grünfolie 2a, die zur Herstellung einer keramischen Schicht verwendet wird, mit einem weiteren Ausführungsbeispiel einer Innenelektrode 3 in Draufsicht. Diejenigen Elemente der Figur 4, die Elementen der Figur 2 entsprechen, sind mit denselben Bezugszeichen versehen und werden nicht nochmals beschrieben.

In dem Ausführungsbeispiel der Figur 4 sind gezackte Streifen 14 vorhanden, zwischen denen die Unterbrechungen 17 längs einer zu dem Rand 16 parallelen Geraden 9 in dem Überlappungsbereich 11 vorhanden sind. Die gezackten Streifen 14 werden zumindest abschnittsweise mit zunehmendem Abstand von dem Anschlussbereich 10 schmaler. Die gezackten Streifen 14 sind senkrecht zu dem Rand 16 des Anschlussbereiches 10 und parallel zueinander angeordnet und durch Zwischenräume unterschiedlicher Längen voneinander getrennt. Die gezackten Streifen 14 können statt dessen anders angeordnet sein, insbesondere zum Beispiel parallel zueinander und nicht senkrecht zu dem Rand 16 des Anschlussbereiches 10. Die längs einer zu dem Rand 16 parallelen Geraden 9 vorhandenen Unterbrechungen 17 sind in einem großen Abstand zu dem Anschlussbereich 10 in größerer Anzahl als in einem kleinen Abstand zu dem Anschlussbereich 10 vorhanden. Bei weiteren Ausführungsbeispielen ist der Überlappungsbereich 11 nur längs einer parallel zu dem Rand 16 in einem Abstand zu dem Anschlussbereich 10 verlaufenden Geraden 9 mehrfach unterbrochen. Die Zwischenräume zwischen den gezackten Streifen 14 beginnen bei derartigen Ausführungsbeispielen in einem Abstand zu dem Anschlussbereich 10.

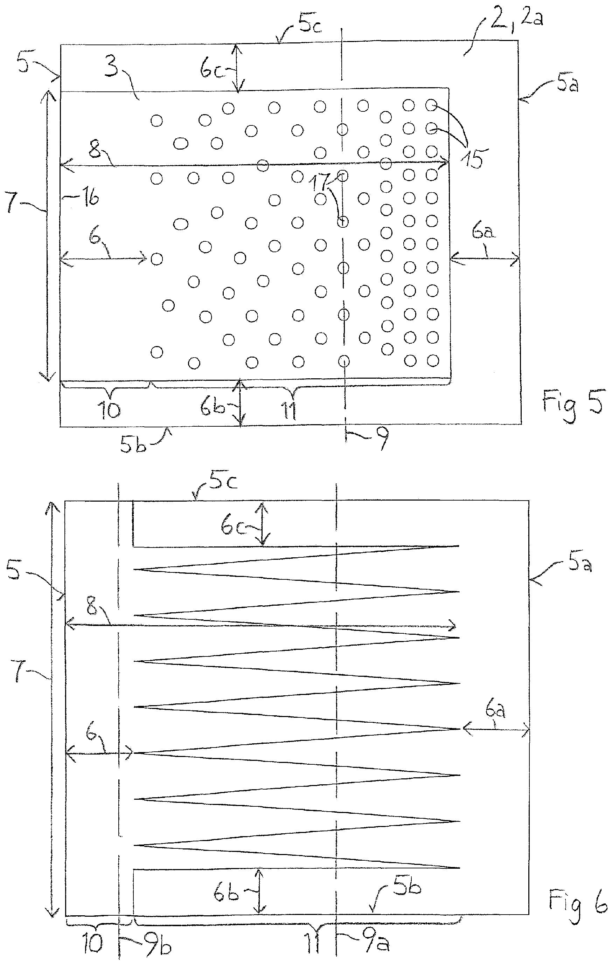

Die Figur 5 zeigt eine keramische Schicht 2 beziehungsweise eine Grünfolie 2a, die zur Herstellung einer keramischen Schicht verwendet wird, mit einem weiteren Ausführungsbeispiel einer Innenelektrode 3 in Draufsicht. Diejenigen Elemente der Figur 5, die Elementen der Figur 2 entsprechen, sind mit denselben Bezugszeichen versehen und werden nicht nochmals beschrieben.

In dem Ausführungsbeispiel der Figur 5 sind Löcher 15 in dem Überlappungsbereich 11 vorhanden, mit denen die Unterbrechungen 17 längs einer zu dem Rand 16 parallelen Geraden 9 gebildet sind. Wie der Figur 5 unmittelbar zu entnehmen ist, brauchen die Unterbrechungen 17 nicht längs jeder zu dem Rand 16 parallelen Geraden 9 in dem Überlappungsbereich 11 vorhanden zu sein. Es kann also mindestens eine solche Gerade 9 geben, die keines der Löcher 15 schneidet. Es kann jedoch von Vorteil sein, wenn die Löcher 15 eine Verteilung aufweisen, deren Dichte mit zunehmendem Abstand von dem Anschlussbereich 10 zunimmt. Die Löcher 15 können beispielsweise kreisförmig berandet sein und alle denselben Durchmesser besitzen. Statt dessen können die Durchmesser der Löcher 15 unterschiedlich sein. Die Löcher 15 können andere Formen und gleiche oder unterschiedliche Größen aufweisen. Die Löcher 15 brauchen nicht in dem gesamten Überlappungsbereich 11 vorhanden zu sein, sondern können statt dessen nur in einem Abstand von dem Anschlussbereich 10 vorgesehen sein.

Weitere Ausführungsbeispiele ergeben sich aus einer Kombination der Merkmale der anhand der Figuren 2 bis 5 beschriebenen Strukturen der Innenelektroden 3, 3a, 3b, 3c. Auch bei solchen Ausführungsbeispielen nehmen die Unterbrechungen des Überlappungsbereiches 11 mit zunehmendem Abstand von dem Anschlussbereich 10 in ihrer Anzahl, in ihrer Größe oder in ihrer Anzahl und Größe vorzugsweise zu.

Die Figur 6 zeigt ein weiteres Ausführungsbeispiel, das dem Ausführungsbeispiel gemäß der Figur 2 weitgehend entspricht. Bei dem Ausführungsbeispiel gemäß der Figur 6 ist die erste Abmessung 7 gleich der Breite der Außenfläche 5, so dass der Anschlussbereich 10 an beide seitlichen Außenflächen 5b, 5c heranreicht. Der Überlappungsbereich 11 besitzt Abstände 6b, 6c zu den seitlichen Außenflächen 5b, 5c und ist folglich schmaler als der Anschlussbereich 10. Auch bei Ausführungsbeispielen gemäß den Figuren 3 bis 5 kann der Anschlussbereich 10 breiter als der Überlappungsbereich 11 sein. Die Innenelektrode 3 besitzt ihre maximale Breite, entsprechend der ersten Abmessung 7, an dem geradlinigen Rand 16 des Anschlussbereiches 10. Es ist von Vorteil, wenn der Anschlussbereich 10 möglichst breit ist, da die höchste Strombelastung im Betrieb des Bauelementes zwischen der Außenelektrode 4 und dem Überlappungsbereich 11, also in dem Anschlussbereich 10 auftritt.

Es ist vorteilhaft, wenn die Unterbrechungen 17 nicht zu groß sind, damit das elektrische Feld im Betrieb des Bauelementes möglichst homogen ist. Zu diesem Zweck sollten die Abmessungen der Unterbrechungen 17 in der Richtung parallel zu dem Rand 16 des Anschlussbereiches 10 höchstens halb so groß, vorzugsweise höchstens ein Drittel so groß sein wie die Abstände zueinander benachbarter Innenelektroden 3, 3a, 3b, 3c in dem Schichtstapel des Grundkörpers 1. Bei Ausführungsbeispielen mit Löchern 15 in dem Überlappungsbereich 11 sollten die Durchmesser beziehungsweise die maximalen Abmessungen der Löcher 15 höchstens halb so groß, vorzugsweise höchstens ein Drittel so groß sein wie die Abstände zueinander benachbarter Innenelektroden 3, 3a, 3b, 3c in dem Schichtstapel des Grundkörpers 1. Wenn die keramischen Schichten 2 zwischen benachbarten Innenelektroden 3, 3a, 3b, 3c zum Beispiel 150 µm dick sind, sollten die maximalen Abmessungen von Löchern oder die maximalen Breiten von Schlitzen in den Innenelektroden 3, 3a, 3b, 3c typisch nicht mehr als etwa 50 µm betragen.

Außerdem ist zu berücksichtigen, dass der Stromfluss im Betrieb des Bauelementes infolge der Unterbrechungen 17 nicht so homogen ist wie bei einer ganzflächigen Innenelektrode, so dass unter diesem Gesichtspunkt gegebenenfalls kleinere Abmessungen der Unterbrechungen 17 vorzuziehen sind. Die Struktur der Innenelektroden 3, 3a, 3b, 3c kann so angepasst werden, dass die maximale Stromtragfähigkeit des Bauelementes im Vergleich zu herkömmlichen Vielschichtbauelementen praktisch nicht verändert wird und die Betriebseigenschaften des Bauelementes kaum oder nicht beeinflusst werden.

Das Vielschichtbauelement hat den weiteren Vorteil, dass es entsprechend herkömmlichen Bauelementen hergestellt werden kann, wobei nur die Struktur der Innenelektroden geändert werden muss. Das geschieht besonders einfach, wenn die Innenelektroden mit einem Druckverfahren, insbesondere einem Siebdruckverfahren, auf einer Grünfolie hergestellt werden. In diesem Fall muss nur die Bedruckungsschablone geeignet gestaltet werden. Die Innenelektroden 3, 3a, 3b, 3c werden beim Bedrucken der Grünfolie 2a mittels einer geeignet ausgebildeten Bedruckungsschablone so strukturiert, dass der mit der Außenelektrode 4, 4a zu verbindende Rand 16 des Anschlussbereiches 10 mindestens so lang ist wie die Erstreckung des Überlappungsbereiches 11 längs parallel zu diesem Rand 16 verlaufender Geraden 9, 9a und dass der Überlappungsbereich 11 zumindest längs einiger dieser Geraden 9, 9a mehrfach unterbrochen ist. Mit diesem Verfahren lassen sich insbesondere die beschriebenen Ausführungsbeispiele herstellen.

### Bezugszeichenliste

1 Grundkörper
2 keramische Schicht
2a Grünfolie
3, 3a, 3b, 3c Innenelektrode
4, 4a Außenelektrode
5, 5a, 5b, 5c, 5d, 5e Außenfläche
6, 6a, 6b, 6c Abstand
7 erste Abmessung
8 zweite Abmessung
9, 9a, 9b Gerade
10 Anschlussbereich
11 Überlappungsbereich
12 Zacken
13 Streifen
14 gezackter Streifen
15 Loch
16 Rand des Anschlussbereiches
17 Unterbrechung des Überlappungsbereiches

## Patentansprüche

1. Vielschichtbauelement
- mit einem Grundkörper (1), der keramische Schichten (2) und flächige Innenelektroden (3, 3a, 3b, 3c) in alternierender Folge sowie Außenflächen (5, 5a) aufweist, wobei
- die Innenelektroden (3, 3a, 3b, 3c) jeweils einen Anschlussbereich (10) und einen daran angrenzenden Überlappungsbereich (11) aufweisen, und
- mit voneinander getrennten Außenelektroden (4, 4a) auf den Außenflächen (5, 5a) des Grundkörpers (1), wobei
- ein geradliniger Rand (16) des Anschlussbereiches (10) mit einer der Außenelektroden (4, 4a) elektrisch leitend verbunden ist und
- der Überlappungsbereich (11) in Abständen (6, 6a) zu den Außenelektroden (4, 4a) angeordnet ist,
- der mit der Außenelektrode (4, 4a) verbundene Rand (16) des Anschlussbereiches (10) mindestens so lang ist wie die Erstreckung des Überlappungsbereiches (11) längs parallel zu diesem Rand (16) verlaufender Geraden (9, 9a) und
- der Überlappungsbereich (11) zumindest längs einiger dieser Geraden (9, 9a) mehrfach unterbrochen ist,
**dadurch gekennzeichnet, dass**
- die Unterbrechungen (17) des Überlappungsbereiches (11) mit zunehmendem Abstand von dem Anschlussbereich (10) in ihrer Anzahl, in ihrer Größe oder in ihrer Anzahl und Größe zunehmen.

2. Vielschichtbauelement nach Anspruch 1, bei dem der Überlappungsbereich (11) in Zacken (12) strukturiert ist und
die Zacken (12) zumindest abschnittsweise mit zunehmendem Abstand von dem Anschlussbereich (10) schmaler werden.

3. Vielschichtbauelement nach einem der Ansprüche 1 und 2, bei dem
der Überlappungsbereich (11) in Streifen (13) strukturiert ist.

4. Vielschichtbauelement nach Anspruch 3, bei dem
die Streifen (13) senkrecht zu dem mit der Außenelektrode (4, 4a) verbundenen Rand (16) des Anschlussbereiches (10) und parallel zueinander angeordnet sind.

5. Vielschichtbauelement nach Anspruch 1, bei dem
der Überlappungsbereich (11) in gezackte Streifen (14) strukturiert ist, die zumindest abschnittsweise mit zunehmendem Abstand von dem Anschlussbereich (10) schmaler werden.

6. Vielschichtbauelement nach einem der Ansprüche 1 bis 5, bei dem
Abmessungen der Unterbrechungen (17, 17a) des Überlappungsbereiches (11) höchstens halb so groß sind wie die Abstände zueinander benachbarter Innenelektroden (3, 3a, 3b, 3c).

7. Vielschichtbauelement nach einem der Ansprüche 1 bis 5, bei dem
der Überlappungsbereich (11) eine Mehrzahl von Löchern (15) aufweist.

8. Vielschichtbauelement nach Anspruch 7, bei dem
die Löcher (15) eine Verteilung aufweisen, deren Dichte mit zunehmendem Abstand von dem Anschlussbereich (10) zunimmt.

9. Vielschichtbauelement nach Anspruch 7 oder 8, bei dem maximale Abmessungen der Löcher (15) höchstens halb so groß sind wie die Abstände zueinander benachbarter Innenelektroden (3, 3a, 3b, 3c).

10. Vielschichtbauelement nach einem der Ansprüche 1 bis 7, bei dem
die Innenelektroden (3, 3a, 3b, 3c) so angeordnet sind, dass die Überlappungsbereiche (11) in einer Blickrichtung senkrecht zu den Schichten (2) einander überlappen.

11. Verfahren zur Herstellung eines Vielschichtbauelementes, bei dem
- ein Grundkörper (1) aus keramischen Schichten (2) und darauf aufgebrachten flächigen Innenelektroden (3, 3a, 3b, 3c) in alternierender Folge gebildet wird, wobei
- die Innenelektroden (3, 3a, 3b, 3c) durch ein Bedrucken einer keramischen Grünfolie (2a) jeweils mit einem Anschlussbereich (10) und einem daran angrenzenden Überlappungsbereich (11) gebildet werden und
- ein Rand (16) des Anschlussbereiches (10) mit einer an dem Grundkörper (1) angeordneten Außenelektrode (4, 4a) elektrisch leitend verbunden wird, wobei
- die Innenelektroden (3, 3a, 3b, 3c) beim Bedrucken der Grünfolie (2a) so strukturiert werden, dass der mit der Außenelektrode (4, 4a) zu verbindende Rand (16) des Anschlussbereiches (10) mindestens so lang ist wie die Erstreckung des Überlappungsbereiches (11) längs parallel zu diesem Rand (16) verlaufender Geraden (9, 9a) und dass der Überlappungsbereich (11) zumindest längs einiger dieser Geraden (9, 9a) mehrfach unterbrochen ist, **dadurch gekennzeichnet, dass**
- die Unterbrechungen (17) des Überlappungsbereiches (11) mit zunehmendem Abstand von dem Anschlussbereich (10) in ihrer Anzahl, in ihrer Größe oder in ihrer Anzahl und Größe zunehmen.

12. Verfahren nach Anspruch 11, bei dem
die Innenelektroden (3, 3a, 3b, 3c) beim Bedrucken der Grünfolie (2a) so strukturiert werden, dass Abmessungen der Unterbrechungen (17, 17a) des Überlappungsbereiches (11) höchstens die halbe Dicke der Grünfolie (2a) betragen.

13. Verfahren nach Anspruch 11 oder 12, bei dem
das Bedrucken der keramischen Grünfolie (2a) unter Verwendung eines Bedruckungssiebs erfolgt und
Löcher (15) in dem Überlappungsbereich (11) dadurch gebildet werden, dass einzelne Öffnungen des Bedruckungssiebs vor dem Bedrucken verschlossen werden.

## Claims

1. Multi-layer component
- with a main body (1) which has ceramic layers (2) and two-dimensional inner electrodes (3, 3a, 3b, 3c) in an alternating sequence, and also outer surfaces (5, 5a), wherein
- the inner electrodes (3, 3a, 3b, 3c) each have a connecting region (10) and an overlapping region (11) adjacent thereto, and
- with outer electrodes (4, 4a) which are separate from each other on the outer surfaces (5, 5a) of the main body (1), wherein
- a rectilinear edge (16) of the connecting region (10) is connected to one of the outer electrodes (4, 4a) in an electrically conductive manner, and
- the overlapping region (11) is arranged at distances (6, 6a) from the outer electrodes (4, 4a),
- the edge (16) of the connecting region (10) that is connected to the outer electrode (4, 4a) is at least as long as the extent of the overlapping region (11) along straight lines (9, 9a) running parallel to said edge (16), and
- the overlapping region (11) is multiply interrupted at least along a number of said straight lines (9, 9a),
**characterized in that**
- the interruptions (17) in the overlapping region (11) increase in the number thereof, in the size thereof or in the number and size thereof with increasing distance from the connecting region (10).

2. Multi-layer component according to Claim 1, in which the overlapping region (11) is structured in serrations (12), and the serrations (12) at least partially become narrower with increasing distance from the connecting region (10).

3. Multi-layer component according to one of Claims 1 and 2, in which the overlapping region (11) is structured in strips (13).

4. Multi-layer component according to Claim 3, in which the strips (13) are arranged perpendicularly to the edge (16) of the connecting region (10) that is connected to the outer electrode (4, 4a) and are arranged parallel to each other.

5. Multi-layer component according to Claim 1, in which the overlapping region (11) is structured in serrated strips (14) which at least partially become narrower with increasing distance from the connecting region (10).

6. Multi-layer component according to one of Claims 1 to 5, in which dimensions of the interruptions (17, 17a) in the overlapping region (11) are at most half the size of the distances between mutually adjacent inner electrodes (3, 3a, 3b, 3c).

7. Multi-layer component according to one of Claims 1 to 5, in which the overlapping region (11) has a plurality of holes (15).

8. Multi-layer component according to Claim 7, in which the holes (15) have a distribution, the density of which increases with increasing distance from the connecting region (10).

9. Multi-layer component according to Claim 7 or 8, in which maximum dimensions of the holes (15) are at most half the size of the distances between mutually adjacent inner electrodes (3, 3a, 3b, 3c).

10. Multi-layer component according to one of Claims 1 to 7, in which the inner electrodes (3, 3a, 3b, 3c) are arranged in such a manner that the overlapping regions (11) overlap one another in a viewing direction perpendicular to the layers (2).

11. Method for producing a multi-layer component, in which
- a main body (1) is formed from ceramic layers (2) and two-dimensional inner electrodes (3, 3a, 3b, 3c), which are provided thereon, in an alternating sequence, wherein
- the inner electrodes (3, 3a, 3b, 3c) are formed by printing a ceramic green sheet (2a) in each case with a connecting region (10) and an overlapping region (11) adjacent thereto, and
- an edge (16) of the connecting region (10) is connected in an electrically conductive manner to an outer electrode (4, 4a) arranged on the main body (1),
wherein
- during the printing of the green sheet (2a), the inner electrodes (3, 3a, 3b, 3c) are structured in such a manner that the edge (16) of the connecting region (10) that is to be connected to the outer electrode (4, 4a) is at least as long as the extent of the overlapping region (11) along straight lines (9, 9a) running parallel to said edge (16), and that the overlapping region (11) is multiply interrupted at least along a number of said straight lines (9, 9a), **characterized in that**
- the interruptions (17) in the overlapping region (11) increase in the number thereof, in the size thereof or in the number and size thereof with increasing distance from the connecting region (10).

12. Method according to Claim 11, in which, during the printing of the green sheet (2a), the inner electrodes (3, 3a, 3b, 3c) are structured in such a manner that dimensions of the interruptions (17, 17a) in the overlapping region (11) are at most half the thickness of the green sheet (2a).

13. Method according to Claim 11 or 12, in which the ceramic green sheet (2a) is printed using a printing screen, and holes (15) are formed in the overlapping region (11) by individual openings in the printing screen being closed before the printing.

## Revendications

1. Composant multicouche
- comprenant un corps de base (1) qui possède des couches en céramique (2) et des électrodes internes (3, 3a, 3b, 3c) plates en une séquence alternée ainsi que des surfaces externes (5, 5a),
- les électrodes internes (3, 3a, 3b, 3c) possédant respectivement une zone de raccordement (10) et une zone de chevauchement (11) adjacente contre celle-ci, et
- comprenant des électrodes externes (4, 4a) séparées les unes des autres sur les surfaces externes (5, 5a) du corps de base (1),
- un bord (16) rectiligne de la zone de raccordement (10) étant relié de manière électriquement conductrice à l'une des électrodes externes (4, 4a) et
- la zone de chevauchement (11) étant disposée à des écarts (6, 6a) des électrodes externes (4, 4a),
- le bord (16) de la zone de raccordement (10) qui est relié à l'électrode externe (4, 4a) étant au moins aussi long que la projection de la zone de chevauchement (11) le long de droites (9, 9a) qui s'étendent parallèlement à ce bord (16) et
- la zone de chevauchement (11) étant interrompue plusieurs fois au moins le long de certaines de ces droites (9, 9a),
**caractérisé en ce que**
- les interruptions (17) de la zone de chevauchement (11) augmentent en nombre, en taille ou en nombre et en taille à mesure que l'écart par rapport à la zone de raccordement (10) augmente.

2. Composant multicouche selon la revendication 1, avec lequel la zone de chevauchement (11) est structurée en dents (12) et les dents (12) deviennent plus étroites au moins dans certaines portions à mesure que l'écart de la zone de raccordement (10) augmente.

3. Composant multicouche selon l'une des revendications 1 et 2, avec lequel la zone de chevauchement (11) est structurée en bandes (13).

4. Composant multicouche selon la revendication 3, avec lequel les bandes (13) sont disposées perpendiculairement au bord (16) de la zone de raccordement (10) relié à l'électrode externe (4, 4a) et parallèlement les unes aux autres.

5. Composant multicouche selon la revendication 1, avec lequel la zone de chevauchement (11) est structurée en bandes dentelées (14) qui deviennent plus étroites au moins dans certaines portions à mesure que l'écart de la zone de raccordement (10) augmente.

6. Composant multicouche selon l'une des revendications 1 à 5, avec lequel les dimensions des interruptions (17, 17a) de la zone de chevauchement (11) sont au maximum égales à la moitié des écarts des électrodes internes (3, 3a, 3b, 3c) voisines entre elles.

7. Composant multicouche selon l'une des revendications 1 à 5, avec la zone de chevauchement (11) possède une pluralité de trous (15).

8. Composant multicouche selon la revendication 7, avec lequel les trous (15) possèdent une distribution dont la densité augmente à mesure que l'écart de la zone de raccordement (10) augmente.

9. Composant multicouche selon la revendication 7 ou 8, avec lequel les dimensions maximales des trous (15) sont au maximum égales à la moitié des écarts des électrodes internes (3, 3a, 3b, 3c) voisines entre elles.

10. Composant multicouche selon l'une des revendications 1 à 7, avec lequel les électrodes internes (3, 3a, 3b, 3c) sont disposées de telle sorte que les zones de chevauchement (11) se chevauchent mutuellement dans un sens d'observation perpendiculaire aux couches (2).

11. Procédé de fabrication d'un composant multicouche, selon lequel
- un corps de base (1) constitué de couches en céramique (2) et d'électrodes internes (3, 3a, 3b, 3c) plates montées sur celles-ci est formé en une séquence alternée,
- les électrodes internes (3, 3a, 3b, 3c) étant formées par une impression sur un film vert (2a) en céramique respectivement d'une zone de raccordement (10) et d'une zone de chevauchement (11) adjacente contre celle-ci, et
- un bord (16) de la zone de raccordement (10) est relié de manière électriquement conductrice à une électrode externe (4, 4a) disposée sur le corps de base (1),
- les électrodes internes (3, 3a, 3b, 3c), lors de l'impression sur le film vert (2a), étant structurées de telle sorte que le bord (16) de la zone de raccordement (10) qui doit être relié à l'électrode externe (4, 4a) est au moins aussi long que la projection de la zone de chevauchement (11) le long de droites (9, 9a) qui s'étendent parallèlement à ce bord (16) et de telle sorte que la zone de chevauchement (11) est interrompue plusieurs fois au moins le long de certaines de ces droites (9, 9a),
**caractérisé en ce que**
- les interruptions (17) de la zone de chevauchement (11) augmentent en nombre, en taille ou en nombre et en taille à mesure que l'écart par rapport à la zone de raccordement (10) augmente.

12. Procédé selon la revendication 11, selon lequel les électrodes internes (3, 3a, 3b, 3c), lors de l'impression sur le film vert (2a), sont structurées de telle sorte que les dimensions des interruptions (17, 17a) de la zone de chevauchement (11) sont au maximum égales à la moitié de l'épaisseur du film vert (2a).

13. Procédé selon la revendication 11 ou 12, selon lequel l'impression sur le film vert (2a) est effectuée en utilisant un masque de sérigraphie et des trous (15) sont formés dans la zone de chevauchement (11) en fermant des ouvertures individuelles du masque de sérigraphie avant l'impression.
